# EUROPEAN PATENT SPECIFICATION

(11) **EP 3 804 483 B1**
(45) Date of publication and mention of the grant of the patent: **24.07.2024**
(21) Application number: 20020469.1
(22) Date of filing: 12.10.2020
(51) Int. Cl.: A01B 1/16, A01D 11/04

(54) **TOOL FOR ERADICATION OF INVASIVE HOGWEED SPECIES AND METHOD**
WERKZEUG ZUR AUSROTTUNG INVASIVER BÄRENKLAU-ARTEN UND VERFAHREN
OUTIL ET PROCÉDÉ D'ÉRADICATION D'ESPÈCES ENVAHISSANTES DE BERCE COMMUNE

(43) Date of publication of application: 14.04.2021
(73) Proprietor: Pastwa, Jan Czeslaw, 66-431 Santok (PL)
(72) Inventor: Pastwa, Jan Czeslaw, 66-431 Santok (PL)
(74) Representative: Zielinski, Wojciech Leszek

(56) References cited:
- US-A- 2 057 067
- US-A- 2 282 673
- US-A- 2 686 690
- US-A- 828 452
- US-A1- 2008 105 444

## Description

The present inventions relates to a tool and to a method for eradication of invasive hogweed species: *Heracleum sosnovskyi,* Giant Hogweed (*H. mantegazzianum),* and/or *H. persicum* and to method of their eradication.

The all three hogweed species (Sosnowsky's Hogweed - *Heracleum sosnovskyi,* Giant Hogweed -*Heracleum mantegazzianum,* Persian Hogweed - *Heracleum persicum* are highly invasive plants, alien for the European flora, which displace domestic flora around areas seized by them. Giant and Persian Hogweeds were introduced as botanical curiosity into gardens in the 19^{th} century. The species spread rapidly in Europe and North America. Sosnowsky's Hogweed spread out in Poland, Baltic countries, eastern Germany, Hungary after soviet scientists' recommendations of 50-ties of the previous century proposing that plant for cattle feeding. In the years 60-90 of the previous century the plant was introduced in the State-Owned Farms (PGR). The plant breeding was ceased, however due to extremely high seed production of the plant (it was achieved 2500 kg from 1 ha, which allows to sow 100-200 ha) and due to favourable development conditions the species has started its conquest of new sites. It reaches a considerable size (over 3 m tall) [Wojtkowiak R., Kawalec H., Dubowski A. P.: Heracleum Sosnowskyi Mandel L. Journal of Research and Applications in Agricultural Engineering 2008, Vol. 53(4) pp. 137-142; EPPO data sheet on Invasive Alien Plants: Heracleum mantegazzianum, Heracleum sosnowskyi and Heracleum persicum. Bulletin OEPP/EPPO Bulletin 2009, 39, pp. 489-499]. Sosnowsky's Hogweed is very hard to distinguish from Giant Hogweed by a layman. The Giant Hogweed is bigger (up to 5 m tall) and it also occurs in Poland. Persian Hogweed is very similar to Giant Hogweed, but probably it does not occur in Poland by now [EPPO data sheet on Invasive Alien Plants: Heracleum mantegazzianum, Heracleum sosnowskyi and Heracleum persicum. Bulletin OEPPIEPPO Bulletin, 2009, 39, pp. 489-499]. Their invasiveness is enough significant problem, that the European Commission funded project *Giant Alient Project,* which resulted, among others, in publishing of The Giant Hogweed Best Practice Manual. Guidelines for the management and control of an invasive weed in Europe issued in 2005. These species stand of indigenous plant species occupying large areas, threatening not only biodiversity, but also directly humans. Furanocoumarins contained in these plants cause, after ultraviolet radiation exposure, very danger burnings of the human or animal skin, very difficult for treatment [Jakubowicz O., Zaba C., Nowak G., Jarmuda S., Zaba R., Marcinkowski J. T.: Heracleum sosnowskyi Manden. Annals of Agricultural and Environmental Medicine, 2012; 19(2), pp. 327-328]. Now it creates serious problem for national parks (e.g. Ojcowski, Tatrzański, Biebrzański) both in the view of plant protection and of tourism. Control of invasive hogweed species applies many methods (mechanical and/or chemical) with different efficiency, but destruction of these plants in national parks, nature reserves or protected areas is problematic as plants surrounding hogweed ought to be protected [Wróbel I.: Barszcz Sosnowskiego (Heracleum sosnowskyi MANDEN.) w Pieninach. *Pieniny* - *Przyroda i Cz* 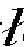 *owiek* 2008, vol 10, pp. 37-43]. Efficacy of the available herbicides recommended for control of dicotyledons varies as well. Zurek Helena [Zurek Helena: Metoda i technika zwalczania barszczu Sosnowskiego. IMUZ, Falenty 2002, p. 11] stated, that the only effective herbicide is a biocidal product marketed as Roundup 360 S, which contains glyphosate as the active substance. Nowadays, the use of the substance is banned country by country due to reports of its harmful effects in human health and destruction of natural environment.

There are known numerous methods for individual plant control. From the Russian patent application no. RU 2011101134 there is also known a solution according to which a kind of syringe is used for a herbicide injection into a hogweed stem. There is known solution provided in the patent description of PL.220254 and EP2943062. Similarly to the Russian invention, the Polish solution does not ensure precise a herbicide dosing, what is of crucial importance in the view of conservancy. Free trickling of a herbicide may result not only in its residues in the remains of combated plant specimen, but in the surrounding soil as well. Limitation of herbicide use determines a level of nature protection. The solution according to PL.220254 and EP2943062 depends on use of a tool comprising of a spike, a hole saw cutter fastened on a coil spring, and well-absorbing absorbing material inside the spring. All the elements are fixed to a handle, while the well-absorbing material is wetted with a herbicide. In other patent application P430625 there is added a system controlling amounts of herbicide provided to the well-absorbing material. All these methods base on a herbicide use with a simultaneous damaging of a hogweed sprig. Hogweed perishes but its dead, hard tissues do not decay for long time. In the touristic regions it is not favourable, as it destroys landscape. There is known from patent description of US2,057,067 a device for weeds eradication consisting of a longitudinal handle and of a cylindrical metal element. One of the ends of the elements has a blade in shape of two lobes, there is a whole over the cylindrically mounted blades. There is a plate deflecting a plant over the whole. The devices is used for extracting a plant from the soil, while the blades cut off an extracted plant form its underground parts. It results in leaving some parts of roots, which could source of a new plant specimens in case of vital organisms. The blades do not reach very deep parts of roots.

Unexpectedly, a simple tool properly used according to the method of the invention results in hogweed eradication and in its quick natural decay.

Tool for eradication of invasive hogweed species according the this invention, consisting of longitudinal handle and the cylindrical blade, characterises in that, at the end of handle corpus, there is placed cylindrical ending, which upper part is stiffly joined with the handle corpus, while the bottom part is truncated at an acute angle and it is sharpened producing a blade. Additionally, in a half of the ending length there is an oval hole located over the blade. Inside the ending there is a cylinder, which bottom ending is truncated at the same angle as the blade and the bottom end of the cylinder is over the hole. Preferably the cylindrical ending is made of steel. Preferably the diameter of the cylindrical ending is smaller than diameter of stem of eradicated hogweed.

Method of eradication of invasive hogweed species according to this invention characterises in that using the tool according to the invention, a hogweed stem is punctured just over soil surface, but not cutting away from underground part of the plant, whereby the most suitable plants are those with flower buds and with unripe (green) seeds; the procedure is to be repeated up 5 seasons at same site against all seed producing specimens in order to achieve complete the hogweed eradication at the site.

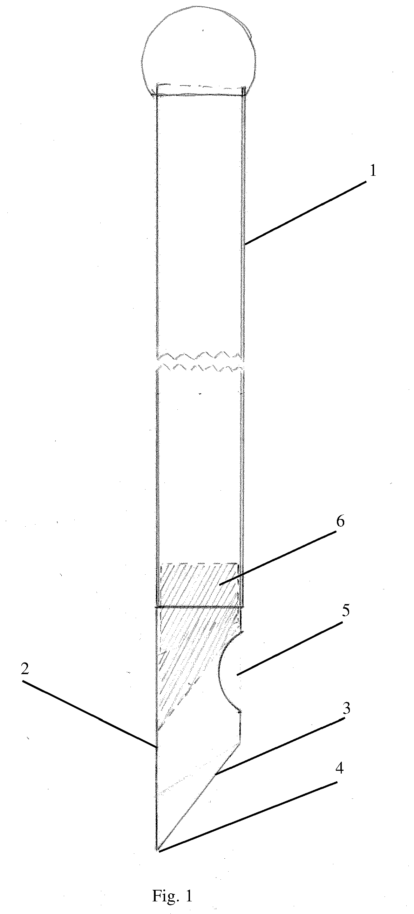

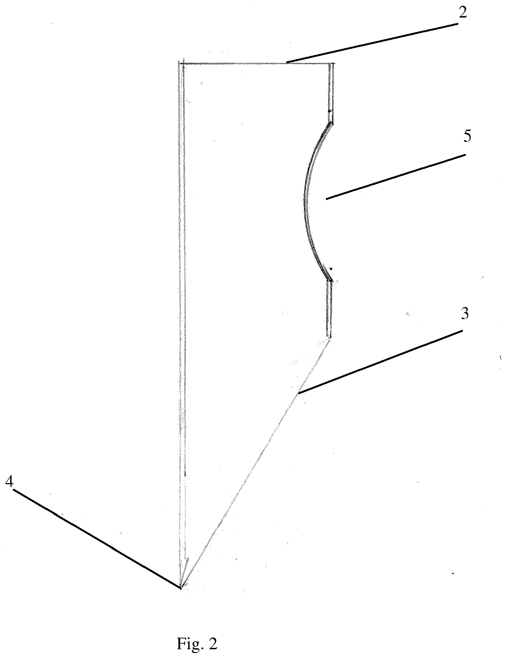

The present invention will now be more particularly described, by way of example only, with reference to the accompanying drawings, in which Figure 1 shows schematic cross-section of the tool and Figure 2 shows the ending.

### Embodiment.

As it shown on Figure 1, the tool consist of a handle corpus 1 in form of a pipe of about 120 cm length (length adjusted to a user's height). At the one end of there is a handle of any shape (a sphere, a transversal rod). The pipe of the handle corpus 1 can also be curved at obtuse angle at its 1/3 of upper part, instead of a handle. At the other end, a cylindrical steel ending 2 is stiffly joined. The ending 2 has a blade 4 at the free edge, which is in form of a slant at acute angle. There is an oval hole 5 over the blade 4. Inside the ending 2 there is a cylinder 6 with a slant parallel to slant of the blade 4. The slant of the cylinder 6 is over the hole 5. The cylinder closes lumen of the ending 2. The diameters of the ending 2 and of hole 5 correspond with a diameter of hogweed stem.

Eradication of hogweed consists in a selection of hogweed specimens with flower buds and unripe (green) seeds at a site. An adequately prepared person (wearing clothes protecting from burnings by hogweed) comes at such plant specimens and strongly pushes the tool in a plant stem just over the soil. The procedure has to be repeated against all seed producing specimens suitable for the method. Monitoring the site one should treat all growing up specimens at susceptible stage identically. Consistent repetition of procedure at the same site up to 5 years results in total hogweed eradication, unless new seeds from other sites will come. The procedure results in quick, natural necrose of punctured specimens and they do not produce seeds. In this way the seeding cycle is interrupted.

The tool and the method allow to eliminate ecologically hogweed sites within 5 years with 100% efficacy. It is crucial, the eradication can be carried out in conservation areas (preserves, national parks, forests etc.) without danger to other plants. It can be done by one person equipped with the tool according to the invention. It means no other plants are damaged. And the most important - without use of chemical compounds. Also important - ecosystem removes dropped down hogweed by the next vegetative season - they disappeared. Opposite to hogweed eradicated with herbicides leaving dried stems. It is important that both aboveground and underground parts of hogweed are biodegraded.

## Claims

1. Tool for eradication of invasive hogweed species consisting of longitudinal handle and cylindrical blade **characterised in that** at the end of handle corpus (1) there is placed cylindrical ending (2), which upper part is stiffly joined with the handle corpus (1), while the bottom part (3) is truncated at an acute angle and it is sharpened producing an uninterrupted oval blade (4), additionally in a half of the ending (2) length there is an uninterrupted oval hole (5) located over the blade (4), whereby inside the ending (2) there is a cylinder (6), which bottom ending is truncated at the same angle as the blade (4) and the bottom end of the cylinder (6) is over the hole (5).

2. Method of eradication of invasive hogweed species **characterised in that** using the tool according to the Claim 1, a hogweed stem is punctured just over soil surface, but not cutting away from underground part of the plant, the procedure is to be repeated up 5 seasons at same site against all new seed producing.

## Patentansprüche

1. Werkzeug zur Ausrottung von invasiven Bärenklau-Arten, bestehend aus einem länglichen Stiel und einer zylindrischen Klinge, **dadurch gekennzeichnet, dass** am Ende des Stielkörpers (1) ein zylindrisches Ende (2) angebracht ist, dessen oberer Teil fest mit dem Stielkörper (1) verbunden ist, während der untere Teil (3) in einem spitzen Winkel abgeschnitten und geschärft ist, wodurch eine unterbrochene ovale Klinge (4) entsteht, zusätzlich befindet sich in der Hälfte der Länge des Ende (2) ein unterbrochenes ovales Loch (5), das sich über der Klinge (4) befindet, wobei sich im Inneren des Ende (2) ein Zylinder (6) befindet, dessen unteres Ende im gleichen Winkel wie die Klinge (4) abgeschnitten ist und das untere Ende des Zylinders (6) sich über dem Loch (5) befindet.

2. Die Methode zur Ausrottung von invasiven Bärenklau-Arten, **dadurch gekennzeichnet ist, dass** unter Verwendung des Werkzeugs nach Anspruch 1 ein Bärenklau-Stängel knapp über der Bodenoberfläche durchstochen wird, ohne jedoch den unterirdischen Teil der Pflanze abzuschneiden, wobei die am besten geeigneten Pflanzen diejenigen mit Blütenknospen und mit unreifen (grünen) Samen sind; das Verfahren ist bis zu 5 Saisons am gleichen Standort gegen alle neuen samenbildenden Exemplare zu wiederholen.

## Revendications

1. Outil d'éradication de la berce du Caucase, composé d'un manche longitudinal et d'une lame cylindrique, **caractérisé par le fait qu'**à l'extrémité du corps du manche (1) est placée une extrémité cylindrique (2), dont la partie supérieure est reliée de manière rigide au corps du manche (1), tandis que la partie inférieure (3) est reliée de manière rigide au corps du manche (2), la partie inférieure (3) est tronquée à un angle aigu et est aiguisée pour produire une lame ovale interrompue (4) ; en outre, sur la moitié de la longueur de l'extrémité (2) se trouve un trou ovale interrompu (5) situé au-dessus de la lame (4) ; à l'intérieur de l'extrémité (2) se trouve un cylindre (6) dont l'extrémité inférieure est tronquée au même angle que la lame (4) et l'extrémité inférieure du cylindre (6) est au-dessus du trou (5).

2. Méthode d'éradication de la berce du Caucase **caractérisée par le fait qu'**à l'aide de l'outil selon la revendication 1, une tige de berce du Caucase est percée juste au-dessus de la surface du sol, mais sans couper la partie souterraine de la plante, les plantes les plus appropriées étant celles avec des boutons floraux et des graines non mûres (vertes) ; la procédure doit être répétée jusqu'à 5 saisons sur le même site contre tous les nouveaux spécimens produisant des semences.
